# EUROPÄISCHE PATENTSCHRIFT

(11) **EP 0 647 791 B1**
(45) Veröffentlichungstag und Bekanntmachung des Hinweises auf die Patenterteilung: **20.08.1997**
(21) Anmeldenummer: 94115148.2
(22) Anmeldetag: 26.09.1994
(51) Int. Cl.: F16D 7/02, F16D 3/18

(54) **Rutschkupplung**
Overload coupling
Accouplement à limitation de couple

(30) Priorität: 07.10.1993 DE 4334252; 26.11.1993 DE 9318167 U
(43) Veröffentlichungstag der Anmeldung: 12.04.1995
(73) Patentinhaber: SIEMENS AKTIENGESELLSCHAFT, 80333 München (DE)
(72) Erfinder: Pfannschmidt, Bernd, Dipl.-Ing. (FH), D-90574 Rosstal (DE); Pohr, Heinz, Dipl.-Ing. (FH), D-90574 Rosstal (DE)

(56) Entgegenhaltungen:
- FR-A- 1 427 952
- FR-A- 2 367 943
- FR-A- 2 531 512
- US-A- 2 055 014
- US-A- 2 482 007
- US-A- 2 659 220
- US-A- 3 132 494
- US-A- 4 373 358
- US-A- 5 092 440

## Beschreibung

Die Erfindung betrifft eine Kupplungseinrichtung.

Kupplungseinrichtungen dienen bei elektrischen Antriebsmotoren dazu, die Antriebskraft auf das Getriebe bzw. die Achse zu übertragen. Die Kupplungseinrichtungen sind gegen das auftretende Anfahrmoment dimensioniert. Werden derartige Antriebe auf Drehstrom umgerüstet, können im Luftspalt des Drehstrommotors Kurzschlußmomente auftreten, die von inneren Kurzschlüssen in den U-Umrichtern verursacht werden und die deutlich größer sind als die Anfahrmomente. Beim Umrüsten der Antriebsmotoren von Gleichstrom auf Drehstrom oder bei der Konstruktion neuer Drehstromantriebe müssen die Kupplungseinrichtungen entweder für die höheren Kurzschlußmomente ausgelegt werden oder es müssen Kupplungseinrichtungen eingesetzt werden, die zwar das Anfahrmoment sicher übertragen, bei den selten auftretenden Kurschlußmomenten aber durchrutschen.

Aus der FR-A-2 367 943 ist eine Verbindung zweier Wellen, nämlich einer Turbinenwelle mit einer Generatorwelle, bekannt. Bei dieser Verbindung ist an einem Flansch der Turbinenwelle eine beidseitig Reibbeläge tragende Scheibe mittels Schraubbolzen befestigt. Das zugeordnete Ende der Generatorwelle trägt einen Flansch mit größerem Durchmesser sowie einen angeformten äußeren Ring, wobei zwischen diesem Ring und dem Generatorwellenflansch ein Hilfsring und ein Unterlegteil mittels Schraubbolzen eingespannt sind, derart, daß der äußere Ring und der Hilfsring im Reibschluß mit den Reibbelägen der Turbinenwellen-Scheibe sind.

Aufgabe der vorliegenden Erfindung ist es, eine konstruktiv einfache Kupplungseinrichtung zu schaffen, die eine sichere Übertragung des Anfahrmomentes gewährleistet, wobei beim Auftreten von gegenüber dem Anfahrmoment höheren Momenten eine Zerstörung der Kupplungseinrichtung zuverlässig verhindert werden soll.

Die Aufgabe wird erfindungsgemäß durch die Merkmale des Anspruchs 1 gelöst. Vorteilhafte Ausgestaltungen der Erfindung sind in den Ansprüchen 2 bis 7 beschrieben.

Die erfindungsgemäße Kupplungseinrichtung umfaßt ein getriebeseitiges Kupplungsteil und ein motorseitiges Kupplungsteil, die zueinander zentriert angeordnet sind sowie eine getriebeseitige und eine motorseitige Druckplatte, die verdrehsicher miteinander verbunden sind. Die motorseitige Druckplatte und das motorseitige Kupplungsteil sind verdrehfest miteinander verbunden und das getriebeseitige Kupplungsteil wird mittels der getriebeseitigen Druckplatte an das motorseitige Kupplungsteil gepreßt, wobei das getriebeseitige Kupplungsteil sowohl mit der getriebeseitigen Druckplatte als auch mit dem motorseitigen Kupplungsteil reibschlüssig verbunden ist.

Bei der Kupplungseinrichtung nach Anspruch 1 ist eine sichere Übertragung des Anfahrmomentes gewährleistet. Gleichzeitig ist sichergestellt, daß die selten auftretenden Kurzschlußmomente nicht zu einer Zerstörung der Kupplungseinrichtung führen. Tritt ein gegenüber dem Anfahrmoment wesentlich höheres Kurzschlußmoment auf, dann wird der Reibschluß zwischen dem motorseitigen Kupplungsteil und dem getriebeseitigen Kupplungsteil einerseits sowie der Reibschluß zwischen dem getriebeseitigen Kupplungsteil und der getriebeseitigen Druckplatte andererseits überschritten, so daß die Kupplungseinrichtung an ihren Reibflachen durchrutscht. Eine mechanische Überbeanspruchung wird dadurch zuverlässig verhindert.

Durch die Merkmale des Anspruchs 1 ist eine bei einem Gleichstromantrieb vorhandene Kupplungseinrichtung auf einfache Weise auf die verschärften Bedingungen eines Drehstromantriebs (gegenüber dem Anfahrmoment erhöhtes Kurzschlußmoment) umrüstbar. Die bisher starr verbundenen Kupplungsteile werden hierfür gelöst. Anstelle der bisher kraftschlüssigen Verbindung beider Kupplungsteile tritt eine reibschlüssige Verbindung, die gegen das Anfahrmoment dimensioniert ist.

Eine Ausführungsform der Kupplungseinrichtung gemaß Anspruch 2 ermöglicht eine kardanische Beweglichkeit zwischen Motorachse und Getriebeachse.

Bei einer Ausgestaltung der Kupplungseinrichtung nach Anspruch 3 wird auf konstruktiv besonders einfache Weise verhindert, daß bei nicht mehr vorhandenem Reibschluß (das Anfahrmoment ist dann überschritten) die getriebeseitige Druckplatte sich relativ zur motorseitigen Druckplatte verdreht.

Die Reibfläche zwischen dem getriebeseitigen Kupplungsteil und dem motorseitigen Kupplungsteil und/oder die Reibfläche zwischen dem getriebeseitigen Kupplungsteil und dem motorseitigen Kupplungsteil sind bei einer Ausgestaltung gemäß Anspruch 5 mit einem Reibbelag versehen.

Durch den Reibbelag auf der Reibfläche bzw. durch die Reibbeläge auf den Reibflächen sind während der gesamten Betriebsdauer definierte Reibverhältnisse gewährleistet, wobei gleichzeitig sichergestellt ist, daß an den Reibflächen der Kupplungsteile keine Reibverschweißung stattfindet. Darüber hinaus ist gegenüber gefetteten Reibflächen der Wartungsaufwand wesentlich reduziert.

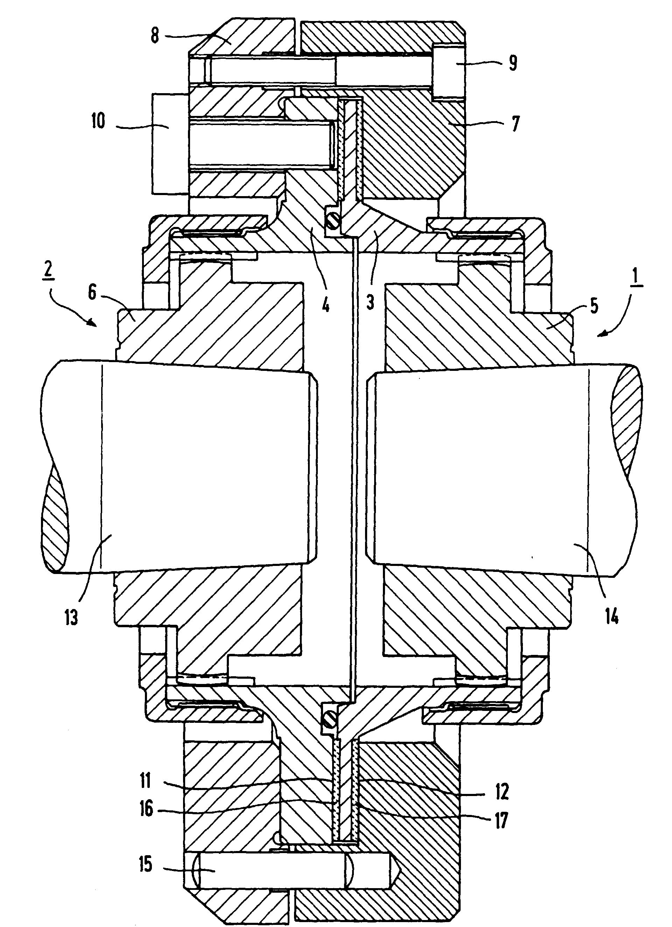

Weitere Vorteile und Einzelheiten der Erfindung ergeben sich aus der nachfolgenden Beschreibung eines Ausführungsbeispiels anhand der Zeichnung und in Verbindung mit den Ansprüchen 2 bis 7.

In der Zeichnung ist mit 1 ein getriebeseitiges Kupplungsteil und mit 2 ein motorseitiges Kupplungsteil bezeichnet. Sowohl das getriebeseitige Kupplungsteil 1 als auch das motorseitige Kupplungsteil 2 bestehen jeweils aus einer innenverzahnten Hülse 3 bzw.4 sowie einer außenverzahnten Nabe 5 bzw.6. Beide Kupplungsteile 1 und 2 sind zueinander zentriert angeordnet. Auf der motorseitigen Hülse 4 zentrieren sich Druckplatten 7 und 8. Die getriebeseitige Druckplatte 7 ist mittels Halteschrauben mit der motorseitigen Druckplatte 8 drehsicher verbunden. Von den Halteschrauben ist in der Zeichnung nur die Halteschraube 9 sichtbar. Weiterhin sind die motorseitige Druckplatte 8 und das motorseitige Kupplungsteil 2 durch Befestigungsschrauben, von denen nur die Befestigungsschraube 10 dargestellt ist, miteinander verbunden. Das motorseitige Kupplungsteil 2 und die motorseitige Druckplatte 8 können gemaß einer nicht dargestellten Ausführungsform auch einstückig ausgebildet sein. Die Befestigungsschraube 10 entfällt dann.

Wie aus der Zeichnung ersichtlich, wird das getriebeseitige Kupplungsteil 1 (bestehend aus der getriebeseitigen Hülse 3 und der getriebeseitigen Nabe 5) durch die getriebeseitige Druckplatte 7 an das motorseitige Kupplungsteil 2 (bestehend aus der motorseitigen Hülse 4 und der motorseitigen Nabe 6) gepreßt, wobei das getriebeseitige Kupplungsteil 1 sowohl mit der getriebeseitigen Druckplatte als auch mit dem motorseitigen Kupplungsteil 2 über ihre Reibflachen 11 bzw.12 reibschlüssig verbunden ist. Der das Rutschmoment der Kupplungseinrichtung bestimmende Reibschluß wird durch die Halteschrauben (in der Zeichnung ist nur die Halteschraube 9 sichtbar) bestimmt.

Durch die geradverzahnte Innenverzahnung der getriebeseitigen Hülse 3 und der motorseitigen Hülse 4 wird zusammen mit der ballig ausgebildeten Außenverzahnung bei der getriebeseitigen Nabe 5 und bei der motorseitigen Nabe 6 eine kardanische Beweglichkeit zwischen Motorwelle 13 und Getriebewelle 14 erreicht.

Um bei nicht mehr vorhandenem Reibschluß eine relative Verdrehung zwischen getriebeseitiger Druckplatte 7 und motorseitiger Druckplatte 8 zu verhindern, ist in der motorseitigen Druckplatte 8 ein Stift 15 einseitig gehalten und in der getriebeseitigen Druckplatte 7 axial beweglich geführt.

Bei der in der Zeichnung dargestellten Ausführungsform der erfindungsgemäßen Kupplungseinrichtung weisen die Reibflächen 11 und 12 jeweils einen Reibbelag 16 bzw.17 auf. Dadurch wird ein definierter Reibwert zwischen dem getriebeseitigen Kupplungsteil 1 und der getriebeseitigen Druckplatte 7 sowie zwischen dem getriebeseitigen Kupplungsteil 1 und dem motorseitigen Kupplungsteil 2 erreicht. Zusammen mit den Halteschrauben 9 kann damit der Reibschluß so gewählt werden, daß eine sichere Übertragung des Anfahrmomentes gewährleistet ist, wobei beim Auftreten von gegenüber dem Anfahrmoment höheren Momenten (z.B. Kurschlußmomente) die Kupplungseinrichtung an ihren Reibbelägen 16 und 17 durchrutscht. Eine Zerstörung der Kupplungseinrichtung wird dadurch auf konstruktiv einfache Weise zuverlässig verhindert.

## Patentansprüche

1. Kupplungseinrichtung, die folgende Merkmale umfaßt:
a) ein getriebeseitiges Kupplungsteil (1) und ein motorseitiges Kupplungsteil (2), die zueinander zentriert angeordnet sind und jeweils aus innenverzahnten Hülsen (3, 4) und außenverzahnten Naben (5, 6) bestehen,
b) eine getriebeseitige Druckplatte (7) und eine motorseitige Druckplatte (8), die verdrehsicher miteinander verbunden sind, wobei
c) die motorseitige Druckplatte (8) und das motorseitige Kupplungsteil (2) verdrehfest miteinander verbunden sind,
d) das getriebeseitige Kupplungsteil (1) wird mittels der getriebeseitigen Druckplatte (7) an das motorseitige Kupplungsteil (2) gepreßt, wobei
e) das getriebeseitige Kupplungsteil (1) sowohl mit der getriebeseitigen Druckplatte (7) als auch mit dem motorseitigen Kupplungsteil (2) reibschlüssig verbunden ist.

2. Kupplungseinrichtung nach Anspruch 1, mit folgenden Merkmalen:
f) das getriebeseitige Kupplungsteil (1) und das motorseitige Kupplungsteil (2) bestehen jeweils aus einer innenverzahnten Hülse (3,4) mit geradverzahnten Zähnen und einer außenverzahnten Nabe (5, 6) mit ballig ausgebildeten Zähnen, wobei
g) die eine Nabe (6) auf der antriebsseitigen Welle (13) und die andere Nabe (5) auf der abtriebsseitigen Welle (14) sitzt und
h) beide Hülsen (3,4) reibschlüssig miteinander verbunden sind.

3. Kupplungseinrichtung nach Anspruch 1 oder 2, mit folgendem Merkmal:
i) ein Stift (15) ist einseitig in einer der beiden Druckplatten (7,8) gehalten und in der anderen Druckplatte (7) axial beweglich geführt.

4. Kupplungseinrichtung nach Anspruch 1, mit folgendem Merkmal:
j) das motorseitige Kupplungsteil (2) und die motorseitige Druckplatte (8) sind einstückig ausgebildet.

5. Kupplungseinrichtung nach Anspruch 1, mit folgendem Merkmal:
k) wenigstens eine Reibfläche (11,12) weist einen Reibbelag (16,17) auf.

6. Kupplungseinrichtung nach Anspruch 1, mit folgendem Merkmal:
l) der Reibbelag bzw. die Reibbeläge (16,17) sind aus einer Aluminium-Bronze-Legierung gefertigt.

7. Kupplungseinrichtung nach Anspruch 1, mit folgendem Merkmal:
m) der Reibbelag bzw. die Reibbeläge (16,17) sind auf die Reibfläche bzw. die Reibflächen (11,12) geklebt.

## Claims

1. Coupling device, comprising the following features:
a) a gear-side coupling part (1) and a motor-side coupling part (2) which are arranged centred with respect to each other and each comprise internal geared sockets (3, 4) and external geared hubs (5, 6),
b) a gear-side pressure plate (7) and a motor-side pressure plate (8) which are connected to each other in a rotationally secure manner, whereby
c) the motor-side pressure plate (8) and the motor-side coupling part (2) are connected to each other in a rotationally secure manner,
d) the gear-side coupling part (1) is pressed against the motor-side coupling part (2) by means of the gear-side pressure plate (7), whereby
e) the gear-side coupling part (1) is frictionally engaged both with the gear-side pressure plate (7) and with the motor-side coupling part (2).

2. Coupling device according to claim 1, having the following features:
f) the gear-side coupling part (1) and the motor-side coupling part (2) each comprise an internal geared socket (3, 4) with straight teeth and an external geared hub (5, 6) with spherically constructed teeth, whereby
g) the one hub (6) is disposed on the drive-side shaft (13) and the other hub (5) is disposed on the output-side shaft (14) and
h) both sockets (3, 4) are frictionally engaged with each other.

3. Coupling device according to claim 1 or 2, having the following feature:
i) a pin (15) is held on one side in one of the two pressure plates (7, 8) and is guided in the other pressure plate (7) in an axially moveable manner.

4. Coupling device according to claim 1, having the following feature:
j) the motor-side coupling part (2) and the motor-side pressure plate (8) are constructed in one piece.

5. Coupling device according to claim 1, having the following feature:
k) at least one friction surface (11, 12) has a friction lining (16, 17).

6. Coupling device according to claim 1, having the following feature:
l) the friction lining or the friction linings (16, 17) are manufactured from an aluminium-bronze alloy.

7. Coupling device according to claim 1, having the following feature:
m) the friction lining or the friction linings (16, 17) are affixed to the friction surface or the friction surfaces (11, 12).

## Revendications

1. Dispositif d'accouplement ayant les caractéristiques suivantes :
a) une partie (1) d'accouplement du côté transmission et une partie (2) d'accouplement du côté moteur, qui sont disposées en étant centrées l'une par rapport à l'autre et qui sont constituées chacune de manchons (3, 4) à denture intérieure et de moyeux (5, 6) à denture extérieure,
b) un plateau (7) de pression du côté transmission et un plateau (8) de pression du côté moteur, qui sont reliés entre eux de manière solidaire en rotation,
c) le plateau (8) de pression du côté moteur et la partie (2) d'accouplement du côté moteur sont reliés entre eux de manière solidaire en rotation,
d) la partie (1) d'accouplement du côté de transmission est pressée au moyen du plateau (7) de pression du côté transmission sur la partie (2) d'accouplement du côté moteur,
e) la partie (1) d'accouplement du côté transmission est reliée par friction à la fois au plateau (7) de pression du côté transmission et à la partie (2) d'accouplement du côté moteur.

2. Dispositif d'accouplement suivant la revendication 1, ayant les caractéristiques suivantes :
f) la partie (1) d'accouplement du côté transmission et la partie (2) d'accouplement du côté moteur sont constituées chacune d'un manchon (3, 4) à denture intérieure ayant des dents droites et d'un moyeu (5, 6) à denture extérieure ayant des dents bombées,
g) l'un (6) des moyeux est calé sur l'arbre (13) du côté entraînement et l'autre moyeu (5) est calé sur l'arbre (14) du côté mené et
h) les deux manchons (3, 4) sont reliés entre eux par friction.

3. Dispositif d'accouplement suivant la revendication 1 ou 2, ayant la caractéristique suivante :
i) une broche (15) est maintenue d'un côté dans l'un des deux plateaux (7, 8) de pression et est guidée de manière mobile suivant l'axe dans l'autre plateau (7) de pression.

4. Dispositif d'accouplement suivant la revendication 1, ayant la caractéristique suivante :
j) la partie (2) d'accouplement du côté moteur et le plateau (8) de pression du côté moteur sont d'une seule pièce.

5. Dispositif d'accouplement suivant la revendication 1, ayant la caractéristique suivante :
k) au moins une surface (11, 12) de friction comporte une garniture (16, 17) de friction.

6. Dispositif d'accouplement suivant la revendication 1, ayant la caractéristique suivante :
I) la garniture de friction ou les garnitures de friction (16, 17) sont fabriquées en un alliage alluminium-bronze.

7. Dispositif d'accouplement suivant la revendication 1, ayant la caractéristiques suivante :
m) la garniture de friction ou les garnitures de friction (16, 17) sont collées sur la surface de friction ou sur les surfaces de friction (11, 12).
